**Europäisches Patentamt**

**European Patent Office**

**Office européen des brevets**

(19)

(11) Veröffentlichungsnummer : **0 340 277 B1**

(12) # EUROPÄISCHE PATENTSCHRIFT

(45) Veröffentlichungstag der Patentschrift :
**17.06.92 Patentblatt 92/25**

(51) Int. Cl.$^5$ : **A23P 1/08,** A23L 1/10

(21) Anmeldenummer : **88909765.5**

(22) Anmeldetag : **02.11.88**

(86) Internationale Anmeldenummer :
**PCT/EP88/00995**

(87) Internationale Veröffentlichungsnummer :
**WO 89/04121 18.05.89 Gazette 89/11**

(54) **VERFAHREN ZUR HERSTELLUNG VON SNACKS ODER DERGLEICHEN PRODUKTE.**

Die Akte enthält technische Angaben, die nach dem Eingang der Anmeldung eingereicht wurden und die nicht in dieserPatentschrift enthalten sind.

(30) Priorität : **04.11.87 DE 3737442**
**04.11.87 DE 3737441**

(43) Veröffentlichungstag der Anmeldung :
**08.11.89 Patentblatt 89/45**

(45) Bekanntmachung des Hinweises auf die Patenterteilung :
**17.06.92 Patentblatt 92/25**

(84) Benannte Vertragsstaaten :
**AT BE CH DE FR GB IT LI LU NL SE**

(56) Entgegenhaltungen :
**EP-A- 0 110 700**
**EP-A- 0 203 842**
**EP-A- 0 211 732**
**DE-A- 2 125 702**
**DE-A- 2 449 283**
**DE-A- 2 604 716**
**US-A- 4 614 657**

(73) Patentinhaber : **HEINZ SCHAAF OHG**
**Otto-Hahn-Strasse**
**W-6277 Bad Camberg 1 (DE)**

(72) Erfinder : **SCHAAF, Heinz-Josef**
**Quellenweg 19a**
**W-6277 Bad Camberg - Oberselters (DE)**

(74) Vertreter : **Patentanwälte Deufel, Hertel, Lewald**
**Isartorplatz 6 Postfach 26 02 47**
**W-8000 München 26 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Cereals, Snacks oder Instantbreien, wobei eine zu deren Herstellung geeignete Mischung extrudiert wird und das Extrudat an der Oberfläche mit Gewürzen und-/oder Aromastoffen versehen wird.

Es ist bekannt, extrudierte Snacks zu trocknen und anschließend Öl und Gewürz aufzutragen, wobei dies in Form einer Mischung aus dem Öl und dem Gewürz oder Öl und Gewürz nacheinander erfolgen kann. Nachteilig dabei ist, daß die Menge des aufgetragenen Öls zu groß werden kann, so daß sich ernährungsphysiologische Nachteile bei dem Produkt einstellen können.

Cereals und Instantbreie insbesondere für Babys werden heute fast ausschließlich auf Walzentrocknungsanlagen hergestellt. Dabei werden die Rohstoffe wie Milchpulver oder Milch, Getreide, Gemüse, Zucker bei Trockensubstanzgehalten von nur 25% bis 30% in Chargen gekocht und anschließend auf Walzentrocknern getrocknet und zu Flocken verarbeitet. Dieser Herstellungsprozeß verbraucht sehr viel Energie und ein großer Teil der natürlichen Vitamine und Nährstoffe der Ausgangsstoffe geht verloren. Diese Nährstoffverluste müssen durch entsprechende vorherige Überdosierung bzw. durch nachträgliche Anreicherung mit konzentrierten Präparaten kompensiert werden.

In vergangenen Jahren sind zahlreiche Versuche unternommen worden, Babynahrung auch mit Hilfe der Kochextrusion herzustellen. Die Steigerung der Verdaulichkeit, Sterilisation, Verkleisterung usw. sind auf dem Extruder sehr wirtschaftlich zu realisieren. Durch extrem kurze Behandlungszeiten bei der Kochextrusion können Nährstoffverluste minimal gehalten werden. Dennoch stehen aus nachstehend angeführten Gründen zahlreiche Hindernisse bei der Anwendung der Extrusionstechnik zur Herstellung von Babynahrung entgegen. Die Zugabe von Milchpulver und Zucker in die Extrusionsmischung ist durch die auftretende Karamelisation und unerwünschte Bräunungsreaktionen bei den zur Verkleisterung erforderlichen Prozeßbedingungen begrenzt. Durch die intensive Homogenisierung im Extruder weisen extrusionstechnisch hergestellte Produkte nicht die Süße auf, die sich bei Produkten mit gleicher Rezeptur ergeben, die mittels eines Walzentrocknungsverfahrens hergestellt werden. Bedingt durch direkt quellende freie Stärke, was in einer Klumpenbildung resultiert, ist das Verhalten extrusionstechnisch hergestellter Flocken oder Granulate beim Einrühren in Milch oder Wasser nicht zufriedenstellend. Eine Zugabe von beispielsweise fetthaltigen Zusatzstoffen ist verfahrenstechnisch schwierig. Extrusionstechnisch hergestellte Granulate sind optisch andersartig als mittels Walzentrocknern hergestellte Produkte, insbesondere ist das Volumen extrudierter Produkte geringer (beispielsweise wird auf die Lehre von EP-A-2-0203842 verwiesen).

Der Erfindung liegt die Aufgabe zugrunde, ein Verfahren zu schaffen, mit welchem leicht verdauliche wohlschmeckende Produkte mit hohen Vitamin- und Nährstoffgehalten wirtschaftlich Snacks oder dergleichen Produkte hergestellt werden können.

Diese Aufgabe wird erfindungsgemäß dadurch gelöst, daß Geschmacksstoffe als wässrige Gewürz- und-/oder Aromasuspension unmittelbar nach dem Extrudieren auf das ungetrocknete heiße Extrudat aufgetragen werden und daß das Extrudat gegebenenfalls nach Schneiden getrocknet wird, wobei die Suspension einen geringen Wassergehalt und hydrolisierende Substanzen aufweist und in der Suspension Enzyme wie Amylasen enthalten sind.

Durch Auftragen der wässrigen Gewürzsuspension auf das ungetrocknete Extrudat wird durch das Wasser die Oberfläche des Extrudates leicht aufgelöst und bildet einen klebrigen Film, auf welchem Gewürze, Brösel, Käsereibsel od.dgl. gut anhaften.

Durch anschließendes Trocknen wird ein Produkt ohne Fettzusatz als Haftmittel geschaffen, wobei eine zusätzliche Verbesserung der Knusprigkeit durch die äußere Kruste erzielt wird, welche sich beim Trocknen der durch das Wasser angelösten Extrudatoberfläche bildet.

In Weiterbildung der Erfindung können besondere geschmackliche Effekte und nicht zuletzt eine Reduktion der Wasserzugabe erreicht werden, wenn einer Gewürzsuspension mit geringerem Wassergehalt hydrolysierende Substanzen beigegeben werden, beispielsweise Enzyme wie Amylasen, welche die Extrudatoberfläche nicht nur physikalisch anlösen, sondern z.B. durch Abbau von Stärke zu Zucker auch verändern und dadurch die Klebeeigenschaften noch verstärken.

Zur Herstellung insbesondere von Instantbreien für Babys wird Getreide und/oder Gemüse und/oder Früchte mit einer Teilmenge an Zucker und Milchkomponenten unter Wärmezufuhr mit großer Oberfläche extrudiert, auf das heiße Extrudat wird eine Suspension aus Flüssigkeit, Zucker und/oder Milchtrockenkomponenten aufgebracht, auf das beschichtete Extrudat wird gegebenenfalls ine Restmenge an Trockenkomponenten in Pulverform aufgetragen, und das mit der Suspension und den Trockenkomponenten überzogene Produkt wird getrocknet.

Mit Hilfe des Extruders wird das Getreide mit einer Teilmenge an Zucker und Milchkomponenten extrudiert. Bei vollständigem Aufschluß des Getreides werden geschmacklich wünschenswerte Bräunungsreaktionen erzielt. Die Menge an Zucker und Milchkomponenten wird dabei so gewählt, daß die aromatischen Reaktionen in dem Extrudat gesteuert werden können. Bei der Ausformung des Extrudates ist darauf zu achten, daß eine möglichst große Oberfläche entsteht. Der aus der Düse austretende Teig expandiert und wird geschnitten, wobei die Düsenform und die Schnittfolge derart eingestellt werden, daß die größtmögliche Oberfläche bei gutem Fließverhalten des Extrudates erreicht wird. Auf das noch dampfende, heiße Extrudat wird die Suspension bestehend aus Flüssigkeiten und Zucker bzw. Milchtrockenkomponenten aufgebracht, vorzugsweise aufgesprüht. Die Viskosität der Suspension bestimmt die Dichte des Überzugs und somit das Verhalten des späteren Granulates beim Einrühren in die Flüssigkeit. Auf das so befeuchtete extrudierte Produkt wird anschließend die Restmenge an Trockenkomponenten in Pulverform aufgetragen und das besprühte und bestäubte Extrudat wird vorzugsweise in einem Infrarottrommeltrockner innerhalb sehr kurzer Zeit getrocknet.

Bei einer bevorzugten Feuchte von 1% bis 6% wird in einem abschließenden Mahlprozeß das Extrudat auf die gewünschte Größe granuliert.

In Ausgestaltung der Erfindung wird Sirup auf das Extrudat aufgesprüht. Sirup ist ein schwer zu kristallisierender Stoff, dessen Verarbeitung mit herkömmlichen Verfahren nicht möglich war. Anstelle von Sirup können vergleichbare Produkte auf das aus dem Extrudat bestehende Trägermaterial aufgebracht werden.

Insbesondere ist das Verfahren auch anwendbar zur Herstellung von Instanttrinksuppen oder Soßenbinder. Das Verfahren eignet sich zur Herstellung von Produkten, bei welchen vorverkleisterte Stärke mit anderen Komponenten zu kaltquellenden Instantmehlen oder Instantgranulaten verarbeitet wird.

Das erfindungsgemäße Verfahren zeichnet sich durch geringen Energiebedarf aus, da der eigentliche Kochprozeß bei sehr niedriger Feuchte durchgeführt wird und Wasser oder feuchte Rohmaterialien nur in geringen Mengen verwendet werden. Durch die extreme Kurzzeitbehandlung der Rohstoffe sowohl beim Extrudieren als auch beim Trocknen des beschichteten Extrudates sind die Nährstoffverluste sehr gering. Trotzdem wird eine optimale Sterilisierung erreicht.

Die Möglichkeit, Milch, Früchte, Gemüse usw. ohne Vorbehandlung frisch zu verwenden, erbringt vielfältige Einsatzmöglichkeiten des erfindungsgemäßen Verfahrens zur Herstellung neuer Produkte.


## Patentansprüche

1. Verfahren zur Herstellung von Cereals, Snacks oder Instantbreien, wobei eine zu deren Herstellung geeignete Mischung extrudiert wird und das Extrudat an der Oberfläche mit Gewürzen und/oder Aromastoffen versehen wird, dadurch **gekennzeichnet**, daß Geschmacksstoffe als wässrige Gewürz- und/oder Aromasuspension unmittelbar nach dem Extrudieren auf das ungetrocknete heiße Extrudat aufgetragen werden und daß das Extrudat gegebenenfalls nach Schneiden getrocknet wird, wobei die Suspension einen geringen Wassergehalt und hydrolisierende Substanzen aufweist und in der Suspension Enzyme wie Amylasen enthalten sind.

2. Verfahren nach Anspruch 1, dadurch **gekennzeichnet**, daß beispielsweise Brösel, Käse, Reibsel aufgebracht werden.

3. Verfahren, insbesondere zur Herstellung von Cereals, Snacks und Instantbreien, insbesondere für Babys, aus Getreide, Gemüse, Früchten, Zucker, Milch oder Milchpulver, dadurch **gekennzeichnet**, daß das Getreide und/oder das Gemüse und/oder die Früchte mit einer Teilmenge an Zucker und Milchkomponenten, die die nur geschmacklich erwünschte Bräunungsreaktion zulassen, unter Wärmezufuhr mit großer Oberfläche extrudiert werden, auf das heiße Extrudat unmittelbar nach der Extrusion eine Suspension aus Flüssigkeit, Zucker und/oder Milchkomponenten aufgebracht wird, daß auf das beschichtete Extrudat die Restmenge an Trockenkomponenten in Pulverform aufgetragen wird und das mit der Suspension und der Restmenge an Trockenkomponenten beschichtete Produkt getrocknet wird und das getrocknete Produkt granuliert wird.

4. Verfahren nach Anspruch 3, dadurch **gekennzeichnet**, daß das Extrudat mit der Suspension besprüht und mit der Restmenge an Trockenkomponenten bestäubt wird.

5. Verfahren nach einem der vorhergehenden Ansprüche, dadurch **gekennzeichnet**, daß auf eine Restfeuchte des Extrudats nach dem Trocknen von 1 bis 6% getrocknet wird.

6. Verfahren nach einem der vorhergehenden Ansprüche, dadurch **gekennzeichnet**, daß Sirup auf das Extrudat aufgesprüht wird.

7. Anwendung des Verfahrens nach einem der Ansprüche 3 bis 6 auf die Herstellung von Instantdrinks, Suppen oder Soßenbinder.


## Claims

1. Method of producing cereals, snacks or instant spoon foods, in which a mixture suitable for production thereof is extruded and the extrudate is provided on the surface with spices and/or aromatic substances, characterized in that flavouring substances in the form of an aqueous suspension of spices and/or aromatic substances are applied directly after the extrusion onto the undried hot extrudate, and in that the extrudate, possibly after cutting, is dried, the suspension having a low water content and hydrolysable substances, and enzymes such as amylases being contained in the suspension.

2. Method according to Claim 1, characterized in that for example crumbs, cheese, grated ingredients are applied.

3. Method, in particular of producing cereals, snacks and instant spoon foods, particularly for babies, from grain, vegetables, fruits, sugar, milk or milk powder, characterized in that the grain and/or the vegetables and/or the fruits are extruded with a proportion of sugar and milk components which permit only that browning reaction desired for taste reasons, with a supply of heat of large surface area, a suspension of liquid, sugar and/or milk components is applied to the hot extrudate directly after the extrusion, in that the remaining quantity of dry components is applied to the coated extrudate in powder form, and the product, coated with the suspension and the remaining quantity of dry components, is dried and the dried product is granulated.

4. Method according to Claim 3, characterized in that the extrudate is sprayed with the suspension and is dusted with the remaining quantity of dry components.

5. Method according to one of the preceding claims, characterized in that the residual moisture of the extrudate after the drying amounts to 1% to 6%.

6. Method according to one of the preceding claims, characterized in that syrup is sprayed onto the extrudate.

7. Use of the method according one of Claims 3 to 6 for the production of instant drinks, soups or sauce binders.

## Revendications

1. Procédé de préparation de céréales, de repas légers ou de bouillies instantanées, dans lequel un mélange approprié à leur préparation est extrudé, et la surface de l'extrudat est garnie d'épices et/ou de substances aromatiques, caractérisé en ce que les aromates, se présentant sous la forme d'une suspension aqueuse d'épices et/ou d'aromates, sont appliqués sur l'extrudat chaud non séché, directement après l'extrusion, et que l'extrudat est séché éventuellement après le découpage, la suspension contenant une petite quantité d'eau et des substances capables de produire une hydrolysation, et des enzymes telles que des amylases sont contenues dans la suspension.

2. Procédé selon la revendication 1, caractérisé en ce qu'on applique, par exemple, des miettes, du fromage ou des râpures.

3. Procédé, en particulier pour la préparation de céréales, de repas légers et de bouillies instantanées, en particulier pour les bébés, à base de céréales, de légumes, de fruits, de sucre, de lait ou de lait en poudre, caractérisé en ce que les légumes et/ou les fruits sont extrudés avec une portion de sucre et de composants lactés, qui permettent seulement la réaction de caramélisation souhaitée du point de vue gustatif, avec un apport de chaleur sur une grande surface, une suspension de liquide, de sucre et/ou de composants lactés est appliquée sur l'extrudat chaud directement après l'extrusion, que la quantité restante de composants secs est appliquée, sous la forme d'une poudre, sur l'extrudat enduit, et le produit recouvert de la suspension et de la quantité restante de composants secs est séché, et le produit séché est réduit en granules.

4. Procédé selon la revendication 3, caractérisé en ce qu'on pulvérise la suspension sur l'extrudat et on le saupoudre avec la quantité restante de composants secs.

5. Procédé selon une des revendications précédentes, caractérisé en ce qu'on sèche l'extrudat jusqu'à ce qu'il présente une humidité résiduaire de 1 à 6 % après le séchage.

6. Procédé selon une des revendications précédentes, caractérisé en ce qu'on pulvérise du sirop sur l'extrudat.

7. Mise en oeuvre du procédé selon une des revendications 3 à 6 pour la préparation de boissons instantanées, de soupes ou de liants pour sauces.